Europäisches Patentamt

(19) European Patent Office

Office européen des brevets

(11) Numéro de publication: **0 021 968**
**A1**

(12) **DEMANDE DE BREVET EUROPEEN**

(21) Numéro de dépôt: **80400866.2**

(22) Date de dépôt: **13.06.80**

(51) Int. Cl.³: **G 05 B 19/40**
**G 05 B 19/23**

---

(30) Priorité: **15.06.79 FR 7915376**

(43) Date de publication de la demande:
**07.01.81 Bulletin 81/1**

(84) Etats Contractants Désignés:
**AT BE CH DE GB IT LI LU NL SE**

(71) Demandeur: **SOCIETE D'ETUDES RECHERCHES ET CONSTRUCTIONS ELECTRONIQUES SERCEL**
**Avenue du Bel Air Zone Industrielle**
**F-44470 Carquefou(FR)**

(72) Inventeur: **Angelle, Philippe**
**"Le Fayau" Treillieres**
**F-44215 La Chapelle Sur Erdre(FR)**

(74) Mandataire: **Martin, Jean-Jacques et al,**
**Cabinet REGIMBEAU 26, Avenue Kléber**
**F-75116 Paris(FR)**

---

(54) Machine de positionnement de précision à courroie crantée avec compensation de l'erreur sur le pas de crantage.

(57) L'invention concerne une machine de positionnement de précision.

Il s'agit d'une machine à courroie crantée de transmission entraînée par un moteur pas à pas. Elle comporte un système de compensation automatique de l'erreur sur le pas de courroie crantée, qui fonctionne de la manière suivante : à chaque mise en route de la machine on fait déplacer un chariot entre deux butées extrêmes en comptant le nombre de pas N effectués par le moteur pour parcourir la distance connue D entre ces butées. Ensuite, à chaque fois que le chariot doit parcourir une distance $d$, on commande le déplacement du moteur pas à pas sur un nombre de pas égal à la distance $d$ multipliée par le nombre N de pas et divisée par la distance D (le chiffre calculé étant arrondi à un nombre entier de pas).

Application : machines à dessiner, machines de câblage etc.

./...

Croydon Printing Company Ltd.

22 26 20 Chariot  Courroie crantée  Chariot 24 16 14 10 12 18

Butée de fin de course

Butée de zéro

e  D

Moteur pas à pas

MICROPROCESSEUR 28

ENTRÉE DE DONNÉES 30

## Machine de positionnement de précision à courroie crantée avec compensation de l'erreur sur le pas de crantage.

La présente invention concerne les machines de positionnement de précision, qui servent à entraîner un organe à des positions très précisément déterminées en abcisse et en ordonnée (dans le cas général, quoique l'invention soit parfaitement applicable pour un positionnement selon un seul axe). Il s'agit par exemple de machines à dessiner ou à câbler des composants électroniques etc.

Lorsqu'on désire une très grande précision de positionnement (erreur de 1 à 5 microns maximum), il faut utiliser un appareillage très sophistiqué et coûteux : par exemple une vis sans fin rectifiée de très haute précision, entraînée par un moteur pas à pas, avec des précautions spéciales pour protéger la vis ; ou encore un système asservi où on repère optiquement sur une règle graduée la position atteinte par l'organe à déplacer.

Pour des faibles précisions (erreur de 0,1 à 0,5 mm) on peut utiliser à condition encore que la course de déplacement ne dépasse pas quelques dizaines de centimètres, un moteur pas à pas entraînant l'organe à déplacer par l'intermédiaire de courroies crantées et d'un jeu de poulies dentées coopérant avec ces courroies.

Cette solution est en effet économique. Malheureusement, jusqu'à maintenant on ne pouvait pas se servir de ces courroies crantées pour les machines de précision intermédiaires entre les deux catégories mentionnées ci-dessus, c'est-à-dire pour des machines pour lesquelles on souhaite une précision de 10 à 50 microns sur la position atteinte par l'organe mobile.

En effet, bien que les courroies crantées (constituées en général par une âme en fibre de verre enrobée de matières synthétiques) soient stables en dimensions dans le temps, elles peuvent avoir une erreur de fabrication sur le pas allant jusqu'à 0,1% du pas nominal (en plus du fait que le pas varie avec la tension de la courroie, tension qu'il faut régler à une valeur constante à chaque changement de courroie).

Une telle erreur sur le pas est inacceptable pour des machines d'une précision de 10 à 50 microns et même, si le déplacement est important, pour les machines de précision 100 à 500 microns.

Pour permettre d'obtenir la précision souhaitée tout en conservant une transmission peu coûteuse par courroies crantées, la présente invention propose de prévoir un système de compensation automatique de l'erreur sur le pas des courroies crantées, système qui fonctionne de la manière suivante : à chaque mise en route de la machine, on fait déplacer un chariot (portant l'organe à déplacer et fixé à une courroie crantée) entre deux butées extrêmes (début et fin de course) en comptant le nombre de pas N effectués par un moteur pas à pas d'entraînement de la courroie pour faire parcourir au chariot une distance connue D pour aller d'une butée à l'autre.

Ensuite, à chaque fois que le chariot doit parcourir une distance d, on commande le déplacement du moteur pas à pas sur un nombre de pas égal à la distance d multipliée par le nombre N de pas et divisée par la distance D (le chiffre calculé étant arrondi à un nombre entier de pas).

Ainsi, à chaque mise en route de la machine, on fait un calcul en vue d'une compensation d'une erreur éventuelle par rapport au pas nominal de la courroie crantée.

Plus précisément, la machine de positionnement de précision selon l'invention, qui est du type comportant un moteur pas à pas, un ensemble de poulies dentées, au moins une courroie crantée de transmission engrenant avec les poulies, et un chariot entraîné par la courroie crantée, est caractérisée par le fait qu'elle comprend une butée de début de course et une butée de fin de course séparées par une distance connue sur le trajet du chariot, un ensemble de circuits de commande apte à effectuer à chaque mise en route de la machine

1) un déplacement du chariot par le moteur pas à pas depuis l'une des butées jusqu'à l'autre,

2) un comptage du nombre de pas de moteur effectuées pendant ce trajet,

3) une mise en mémoire du nombre de pas comptés,

cet ensemble de circuits étant apte également à recevoir d'un organe d'entrée de données une information de distance à parcourir par le chariot et à commander le déplacement du moteur sur un nombre de pas égal à ladite distance multipliée par le nombre de pas mis en mémoire et divisée par la distance connue parcourue par le chariot, entre les butées (le chiffre résultant étant arrondi à un nombre entier de pas).

En pratique les machines de positionnement de précision existant actuellement sont déjà en général pourvues d'un microprocesseur qui est capable de recueillir sur un organe d'entrée des données numériques de positions à atteindre ou de distances à parcourir par le chariot et par conséquent de calculer le nombre de pas qui doit être effectué par le moteur pas à pas pour un positionnement donné. C'est ce microprocesseur qui est utilisé dans l'invention pour effectuer les calculs supplémentaires nécessaires à la correction définie ci-dessus.

Comme la correction effectuée à chaque nouveau positionnement dépend de la mesure effectuée à chaque mise en route de la machine, il n'y a en particulier plus de problèmes lorsque l'on change une courroie crantée (étant entendu qu'on arrête la machine pour effectuer ce changement). Dès la remise en route après changement, le microprocesseur enregistre en mémoire un nouveau nombre de pas correspondant aux dimensions de la nouvelle courroie et les positionnements ultérieurs sont corrigés en fonction de cette courroie.

La correction est simplement une interpolation linéaire, c'est-à-dire que si le nombre de pas comptés entre les butées de début et fin de course correspond à une erreur de x % par rapport à ce qu'il serait si la courroie avait des dimensions nominales strictement respectées, les calculs de distance parcourue à chaque fois par le chariot sont corrigés également de x %.

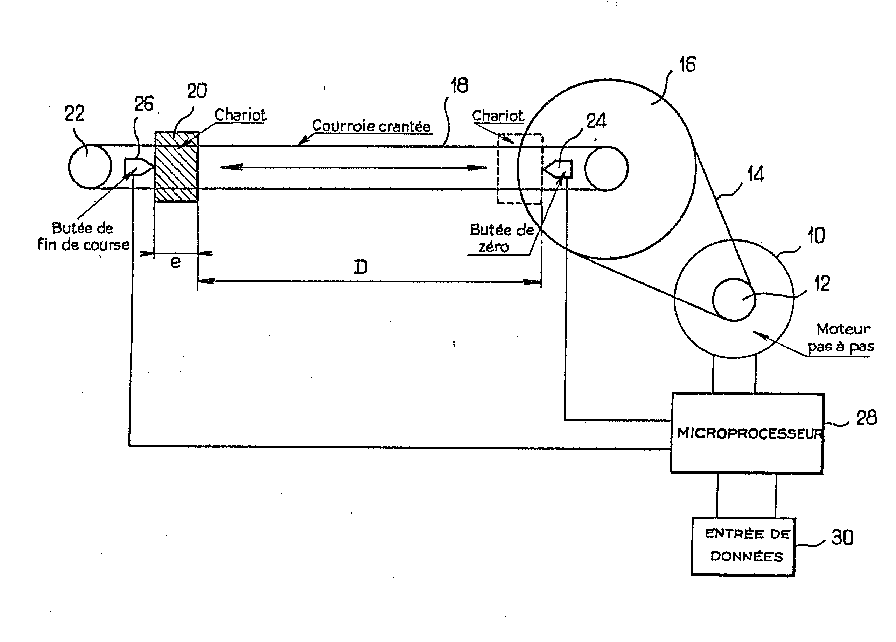

D'autres caractéristiques et avantages de l'invention apparaîtront à la lecture de la description détaillée qui suit et qui est faite en référence au dessin annexé qui représente schématiquement une machine de positionnement précis selon l'invention.

La machine représentée comprend un moteur pas à pas 10 sur l'arbre de sortie duquel est montée une poulie dentée 12 (poulie à 15 dents dans l'exemple décrit), qui engrène avec une première courroie crantée 14. Cette dernière engrène également avec une autre poulie dentée 16 double ayant un grand diamètre à 90 dents (coopérant avec la courroie crantée 14) et un petit diamètre à 15 dents coopérant avec une deuxième courroie crantée 18 sans fin qui porte un chariot 20 et qui passe autour d'une autre poulie 22 de renvoi à 15 dents. Le chariot porte l'organe mobile non représenté qui est à déplacer (stylet, organe de soudure etc.).

Aux deux extrémités du trajet susceptible d'être suivi par le chariot le long de la courroie crantée, on a disposé deux butées électriques, respectivement une butée de zéro 24 et une butée de fin de course 26, c'est-à-dire des butées comprenant un contact électrique actionné par un passage du chariot à une position parfaitement déterminée (à 1 micron près), ce contact actionnant un dispositif de retour du chariot de sorte que le chariot vient finalement s'arrêter à la position déterminée de la butée.

Sur la figure, les butées électriques sont représentées connectées à un microprocesseur 28 lui-même relié au moteur pas à pas 10 qu'il commande. En particulier, le microprocesseur commande une inversion de marche du moteur lorsqu'un interrupteur de butée est actionné par un passage du chariot.

Le microprocesseur 28 commande plus généralement le moteur 10 en fonction de données numériques qu'il reçoit à partir d'un organe d'entrée de données 30 (par exemple un clavier à touches numériques sur lesquelles un opérateur compose une position à atteindre par le chariot, ou encore un lecteur de bande perforée sur laquelle sont inscrites les positions successives à atteindre).

En plus des fonctions habituelles qu'il possède pour transformer les instructions reçues de l'organe 30 en ordres d'avance transmis au moteur 10, le microprocesseur 28 comprend selon l'invention un ensemble de circuits aptes à réaliser les fonctions suivantes :

- à chaque mise en route de la machine, le microprocesseur 28 commande automatiquement le retour du chariot à la butée de zéro 24 s'il n'y est pas déjà, et commande alors la mise à zéro d'un compteur de position prévu dans le microprocesseur ; puis, le microprocesseur commande l'avance, de préférence à grande vitesse, du chariot jusqu'à la butée de fin de course 26 ;

- pendant cette avance, le nombre de pas effectués par le moteur est compté et mis en mémoire de sorte qu'à la fin du trajet le microprocesseur a enregistré un nombre N de pas nécessaires pour que le chariot parcourt le trajet entre les butées ; ce nombre est gardé en mémoire jusqu'à l'arrêt de la machine ;

- si le chariot, avançant à grande vitesse, dépasse d'une certaine distance, correspondant à un certain nombre de pas du moteur, la butée de fin de course, le microprocesseur le ramène à vitesse lente jusqu'à la butée en déduisant du nombre de pas comptés ceux qui sont parcourus en marche arrière ;

- on peut prévoir alors que le microprocesseur laisse le chariot à cette place ou le ramène à la butée de zéro en attente d'un ordre de positionnement venant de l'organe d'entrée 30 ;

- lorsque par la suite un ordre de positionnement du chariot est donné, par exemple pour placer le chariot à une position x1, au lieu que le microprocesseur donne au moteur un ordre d'avance de n1 pas avec n1 = x1/p où p est le pas d'avance du moteur (rapporté en déplacement de la courroie crantée 18 s'il y a un rapport de réduction entre moteur et courroie 18), comme cela était le cas dans la technique antérieure, ici, le microprocesseur donne un ordre d'avance de n'1 où n'1 = x1 x $\frac{N}{D}$ dans lequel N est, on le rappelle, le nombre de pas mis en mémoire dans le microprocesseur, et D est la distance connue de trajet du chariot entre les deux butées (distance entre les butées ; N + e si e est la largeur du chariot dans l'exemple de la figure).

La distance D est parfaitement connue et enregistrée par avance dans le microprocesseur.

Dans le calcul de n'1 = x1 x $\frac{N}{D}$, bien entendu le microprocesseur arrondit à un nombre entier pour avoir un nombre entier de pas du moteur.

De la même façon, si le chariot doit passer d'une position x1 à une position x2, le microprocesseur donnera au moteur un ordre d'avance d'un nombre de pas égal à

(x2 - x1) x $\frac{N}{D}$ (arrondi au nombre entier le plus proche).

Lorsqu'après un arrêt de la machine on remet celle-ci en route, il peut se faire que le nombre de pas compté entre les butées devienne N' au lieu de N (par exemple si on a changé de courroie). Le microprocesseur effectuera alors les calculs avec le nouveau nombre N' enregistré.

A titre d'exemple, si on prend un moteur pas à pas effectuant 200 pas au tour et entraînant le jeu de poulies et de courroies décrit, la courroie 18 ayant un pas de 2,032 mm $\pm$ 0,002 mm, on peut calculer que le pas d'avance du chariot pour un pas du moteur est de 0,0254 mm (1 millième de pouce).

En l'absence de correction selon l'invention, pour une course maximum du chariot de 120 mm, l'erreur due à l'imprécision du pas de crantage de la courroie (0,1 %) pourrait atteindre 0,12 mm soit $\pm$ 5 pas du moteur.

Avec l'invention, on réduit l'erreur sur la course à moins d'un pas du moteur soit 0,025 millimètres.

La machine a été décrite ci-dessus avec un seul moteur pas à pas et un chariot porté par une courroie crantée se déplaçant dans une direction, mais bien entendu le microprocesseur commande en général une machine de positionnement (en abcisse et en ordonnée et la mise en mémoire du nombre de pas entre les butées de zéro et de fin de course doit être faite pour les deux axes ainsi que les calculs d'avance ultérieurs.

Enfin, on a décrit l'invention particulièrement avec un moteur pas à pas, car c'est à une machine fonctionnant par incréments que l'invention s'applique. Cependant, il faut comprendre qu'en pratique il suffit qu'on puisse mesurer des incréments d'avance du moteur sans qu'obligatoirement le moteur avance par à coups :
en particulier on comprendra dans la dénomination
"moteur pas à pas" les moteurs avançant de manière continue mais pourvus d'un codeur angulaire ou linéaire
capable de mesurer, et de répercuter dans le microprocesseur, une avance du moteur comptée par incréments,
le microprocesseur étant capable de donner un ordre
d'avance de $\underline{n}$ incréments après lesquels le moteur
s'arrête.

<u>REVENDICATIONS</u>

1 - Machine de positionnement de précision, comportant un moteur pas à pas, un ensemble de poulies dentées, au moins une courroie crantée de transmission, engrenant avec les poulies, et un chariot entraîné par la courroie crantée, caractérisée par le fait qu'elle comprend une butée de début de course et une butée de fin de course séparées par une distance connue sur le trajet du chariot, un ensemble de circuits de commande apte à effectuer à chaque mise en route de la machine,

1) un déplacement du chariot par le moteur pas à pas depuis l'une des butées jusqu'à l'autre,

2) un comptage du nombre de pas de moteur effectués pendant ce trajet,

3) une mise en mémoire du nombre de pas comptés,

Cet ensemble de circuits étant apte également à recevoir une information de distance à parcourir par le chariot et à commander le déplacement du moteur sur un nombre de pas égal à ladite distance multipliée par le nombre de pas mis en mémoire et divisée par la distance connue parcourue par le chariot entre les butées (le chiffre résultant étant arrondi à un nombre entier de pas).

2 - Machine selon la revendication 1, caractérisé par le fait que l'ensemble de circuits de commande de la machine est apte à commander à chaque mise en route un retour du chariot à une première butée avant le déplacement jusqu'à l'autre, et un nouveau retour jusqu'à la première butée après mise en mémoire du nombre de pas parcourus.

3 - Machine selon l'une des revendications 1 et 2, caractérisé par le fait que le déplacement du chariot d'une butée à l'autre est fait à vitesse rapide, occasionnant un dépassement des butées, et que les circuits de commande sont aptes à soustraire du nombre de pas compté et mis en mémoire un nombre de pas effectués en sens inverse pour revenir à la butée après mise en mémoire.

4 - Machine selon l'une des revendications 1 à 3, caractérisé par le fait que les butées sont des butées électriques comportant un contact électrique actionné par le chariot lors de son passage à une position déterminée très précisément.

**Office européen des brevets**

## RAPPORT DE RECHERCHE EUROPEENNE

Numéro de la demande
EP 80 40 0866

| Catégorie | Citation du document avec indication, en cas de besoin, des parties pertinentes | Revendication concernée |
|---|---|---|
| X | <u>FR - A - 2 373 819</u> (BURROUGHS CORP.)<br><br>\* Page 4, ligne 13 - page 5, ligne 18; page 10, ligne 26 - page 12, ligne 18; figures 1,2, 6 \*<br><br>-- | 1 |
|  | <u>GB - A - 1 142 774</u> (THE GERBER SCIENTIFIC INSTRUMENTS CO.)<br><br>\* Page 2, ligne 5 - page 3, ligne 130; figures \*<br><br>-- | 1 |
|  | IBM TECHNICAL DISCLOSURE BULLETIN vol. 19, no. 12, mai 1977 New York US J.M. WADDELL: "Sensor adjusting", pages 4532-4533<br><br>\* En entier \*<br><br>-- | 1,2 |
|  | <u>FR - A - 2 285 249</u> (SIEMENS A.G.)<br><br>\* Page 3, ligne 26 - page 6, ligne 31; figure 1 \*<br><br>---- | 1,3 |

### DOCUMENTS CONSIDERES COMME PERTINENTS

**CLASSEMENT DE LA DEMANDE (Int. Cl. 3)**

G 05 B 19/40
19/22

**DOMAINES TECHNIQUES RECHERCHES (Int. Cl. 3)**

G 05 B 19/40
19/22
19/18
B 41 J 19/20
1/30
3/12

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche La Haye | Date d'achèvement de la recherche | Examinateur CORNILLIE |
|---|---|---|

OEB Form 1503.1  06.78